# EUROPEAN PATENT SPECIFICATION

(11) **EP 0 357 870 B1**
(45) Date of publication and mention of the grant of the patent: **08.12.1993**
(21) Application number: 89107995.6
(22) Date of filing: 03.05.1989
(51) Int. Cl.: G01P 3/488, G01P 3/487, G01P 3/44

(54) **Unitary rotational speed sensor**
Drehgeschwindigkeitsmessaufnehmereinheit
Unité captrice de mesure de la vitesse de rotation

(30) Priority: 24.08.1988 US 236689
(43) Date of publication of application: 14.03.1990
(73) Proprietor: Rockwell International Corporation, Pittsburgh Pennsylvania 15219 (US)
(72) Inventor: Peck, David E., Rochester Hills Michigan 48064 (US); Kramer, Dennis A., Troy Michigan 48098 (US); Platzer, George E., Rochester Hills Michigan 48309 (US); Krusel, William D., Troy Michigan 48084 (US)
(74) Representative: Leiser, Gottfried, Dipl.-Ing.

(56) References cited:
- EP-A- 0 213 732
- US-A- 3 571 640
- US-A- 3 604 966
- US-A- 3 649 859
- US-A- 3 683 219
- US-A- 3 769 533
- US-A- 3 927 339
- US-A- 4 110 647

## Description

### BACKGROUND OF THE INVENTION

### FIELD OF THE INVENTION

This invention relates generally to rotational speed sensors, and more particularly to compact, unitary rotational speed sensors.

### DESCRIPTION OF THE RELATED ART

Rotational speed sensors are used in many control and indicating systems. One frequently used type employs the variable reluctance principle. Common problems in such sensors in the prior art include keeping the device compact so that it can fit into small spaces, maintaining close control over rotor-stator spacing, and providing sufficient output signal in terms of both signal amplitude and number of pulses per revolution.

Prior art devices known to the inventors include those disclosed in U.S. Patent Nos. 2,462,761 to 3,480,812 to Hershberger; 3,596,122 to Stewart; 3,604,966 to Liggett; 3,649,859 to Watt; 4,027,753 to Lantz; and 4,110,647 to Eslinger et al. In particular, the Hershberger device shows a nesting arrangement of rotor, magnet, coil and stator elements. Watt discloses a reluctance-type rotational speed sensor utilizing radially extending teeth on both stator and rotor. The Lantz device comprises a sealed system. None of the above-mentioned devices, however, combine the various teachings of the present invention to obtain a significantly more compact design that is capable of greater output levels, and versatile enough for use in many environments.

Furthermore, a rotational speed sensor for detecting the rotational speed of a wheel hub is known from the US Patent No. 3,683,219. The rotational speed sensor is mounted over an axel in abutment on the stator and is secured against rotation by a nose in a coil body which engages in a longitudinal groove. The stator is constructed as annular member with U-shaped cross-section. The coil body with the coil winding is inserted into the U-shaped cross-section. An inner leg portion of the stator body carries a radial friction bearing on which the rotor is supported.

The present invention provides a rotational speed sensor having a more compact structure, which is easier to produce and which can generate a high output signal for its size.

More specifically, the present invention provides a rotational speed sensor comprising a stator having circumferentially spaced teeth means formed thereon; a coil of wire disposed coaxial with said stator; a magnet disposed coaxial with said stator; a rotor arranged for rotation about a rotational axis and having first and second axially spaced radially extending surfaces, including circumferentially spaced teeth means; said teeth means of said stator being arranged in physical opposition and in close proximity to said teeth means of said rotor, whereby an electrical current is induced in said coil upon rotation of said rotor; according to the invention the stator includes two coaxial, axially spaced stator elements, each stator element having opposed inner and outer radially extending surfaces, each inner surface having said teeth means formed thereon; said coil of wire is disposed between said stator elements; said magnet is disposed between said stator elements; said teeth means of said rotor are formed on said first and second surfaces of said rotor; and said rotor, said coil and said magnet nest coaxially between said stator elements.

The present rotational speed sensor improves upon prior art speed sensors by utilizing an axially compact design to obtain accurate measurements in a variety of environments. The flat, generally circular shape allows the sensor to measure the rotational speed of either a rotating shaft or a rotating bore. The sensor is designed to minimize the effects of eccentricities and unwanted relative movement between sensor components. For example, both radial runout and axial runout have minimal effect on the output of the sensor. Furthermore, the particular design of the magnetic circuit used by this sensor enables it to generate a high output signal for its size.

The present speed sensor includes a rotor and a stator, each having teeth defining slots, in conjunction with an annular magnet to increase and decrease magnetic flux in the magnetic circuit, enabling measurement of angular speed in accordance with the increase and decrease of the flux. The changes in flux generated by the rotor system induce alternating current in a coil of wire in a well known manner to produce signals representative of angular speed.

Two embodiments of the invention are disclosed. In the first embodiment, an annular magnet circumscribes a sensing coil having a unitary rotor nested within it, and is disposed between two elements which comprise the stator. In a second embodiment, a magnet is disposed between two halves which comprise a rotor, the entire assembly nesting within a sensing coil and being disposed between the two stator elements. Either embodiment may be used, with minor modifications, in environments where a rotating shaft turns within a stationary bore, or where a rotating bore turns about a stationary shaft.

### BRIEF DESCRIPTION OF THE DRAWINGS

Figure 1 is a perspective view of one embodiment of the present speed sensor, showing the sensor mounted in a stationary bore and driven by a rotating shaft;
Figure 2 is an exploded view of the components of the sensor of Figure 1;
Figure 3 is a sectional view taken along the lines III-III in Figure 1;
Figure 4 is a sectional view of the sensor shown in Figure 3 but having an alternate stator construction;
Figure 5 is a sectional view of the sensor according to a second disclosed embodiment;
Figure 6 is an exploded view of the components of the sensor shown in Figure 5;
Figure 7 shows the subject sensor in an alternate configuration suitable for measuring the speed of a rotating bore;
Figure 8 is a view of the sensor shown in Figure 5 mounted in a differential case adjusting ring to measure differential case speed;
Figure 9 is a sectional view of a modification of the arrangement shown in Figure 8;
Figure 10 is a view of the sensor mounted on a wheel spindle within a hubcap for measuring wheel speed; and
Figure 11 is a view of the sensor shown in Figure 5 installed in the output end of a transmission case.

### DESCRIPTION OF THE PREFERRED EMBODIMENTS

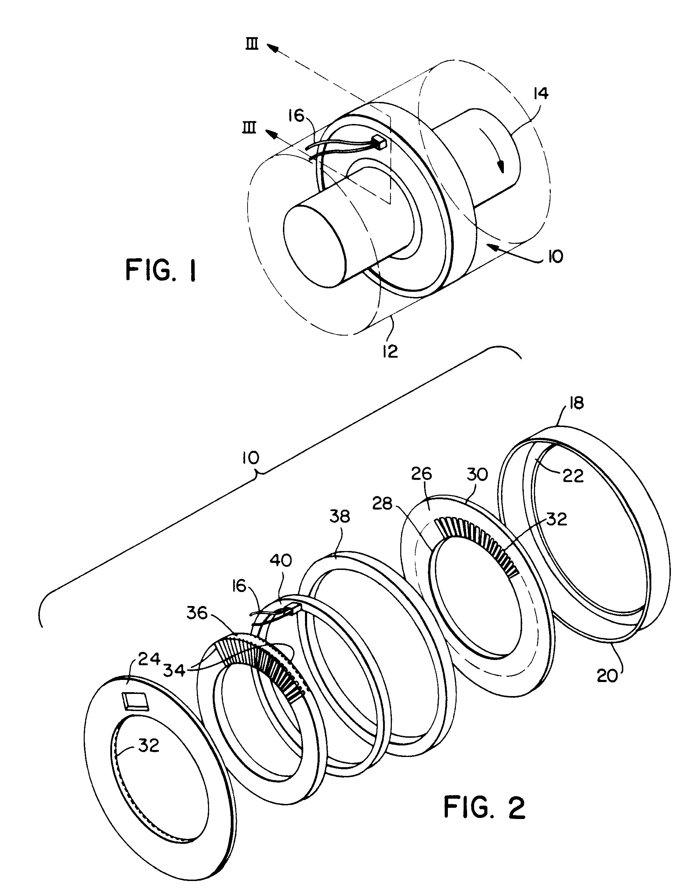

A preferably annular rotational speed sensor constructed according to the teachings of the present invention is indicated generally at 10 in Figure 1. The sensor is mounted in stationary bore 12, and is driven by rotating shaft 14. Electrical leads 16 come from an internal sensing coil.

Figure 2 is an exploded view of the basic components employed in one exemplary embodiment of speed sensor 10. As shown in Figure 2, the components of this first embodiment telescope into sensor retainer 18 from the left. Edge 20 is rolled over to cooperate with lip 22 in retaining the sensor components within retainer 18. The double-lipped design shown in Figure 2 is merely one example of suitable retaining means that could be used with the present embodiment. A variety of other retaining means can be used, including adhesives. Annular stator elements 24 and 26 provide a magnetic path for the aforementioned magnetic flux extending from inner edge 28 to outer edge 30. Circumferentially spaced, radially disposed teeth 32 and slots are formed on the inner faces of stator elements 24 and 26, and act in conjunction with corresponding teeth 34 and slots formed in rotor 36 to provide the means for sensing rotational speed, as discussed in greater detail below. Annular magnet 38, axially poled, provides magnetic flux for sensor 10. A sensing coil, shown encapsulated at 40, consists of a simple multi-turn winding wound so that its axis is coincident with the linear axis of the assembled sensor. Lead wires 16 extend from the two ends of coil 40 to carry alternating current representing rotational speed signals to an external signal processing unit (not shown).

In this first exemplary embodiment, rotor 36 is rotationally driven by shaft 14. Both rotor 36 and stator elements 24, 26 have an equal number of radially disposed teeth and slots. The radial length of the rotor teeth 34 is preferably slightly less than the length of the stator teeth 32, and the rotor teeth 34 are positioned relative to the stator teeth 32 in such a way that the rotor teeth 34 lie within the length of the stator teeth 32. By this design, signal losses due to magnetic shunting and radial runout are reduced. Rotor 36 nests within coil 40, and the rotor-coil combination nests coaxially within magnet 38. This assembly in turn is located coaxially with and between stator elements 24 and 26.

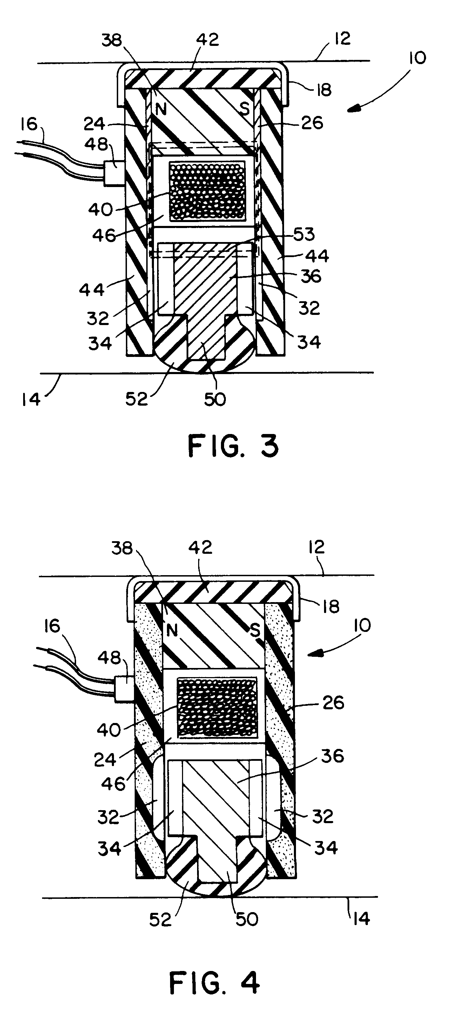

Figure 3 is a sectional view of the sensor shown in Figure 1 taken along lines III-III and looking in the direction of the arrows. In this view, the nesting relationship of rotor 36, coil 40 and magnet 38 is shown.

Stator elements 24 and 26 are relatively thin members, made of, for example, 22 gauge steel. In the design shown, the stator elements 24, 26 are backed by a layer of a non-magnetic material such as injection-molded plastic, as indicated at 44. Stator elements 24, 26 are bonded to retainer 18 by appropriate means, for example by adhesively bonding backing layers 44 to retainer 18. This particular cross section of the stator elements 24 and 26 shows a slot at 31 in each stator element. Teeth and slots in the stator elements may be formed by a variety of methods including stamping or etching. In the final construction, slots 31 are preferably filled with backing material 44. Filling the slots presents a smooth continuous surface on the inner face of each stator element, so that if the rotor 36 rubs against it no damage will occur. The stator elements 24 and 26 must be positioned relative to each other so that teeth and slots are in axial alignment. This may be accomplished by a variety of methods, including projections on the stator elements which match with indentations on coil 40, magnet 38, or optional spacer 42.

Coil 40 is shown encapsulated by bobbin 46. Connections to the ends of coil 40 are made by lead wires 16, which exit through strain relief 48 on bobbin 46. Stator element 24 and backing material 44 are provided with an opening to allow strain relief 48 to pass.

Rotor 36 is slightly thinner than the space between the stator elements 24 and 26 to provide running clearance, and the outer diameter of rotor 36 is less than the inner diameter of coil 40 to provide sufficient clearance to account for eccentricity and dimensional tolerances.

Several techniques can be used to fabricate rotor 36 including sintering powdered iron. Rotor 36 may be a one-piece element, or may comprise two halves oriented with outwardly-facing teeth to operate in the same manner as the one-piece rotor. The rotor is preferably encapsulated in plastic or other suitable material (for example, backing material 44) such that slots 33 are filled flush with teeth 34, thus forming a unitary element regardless of one- or two-piece design.

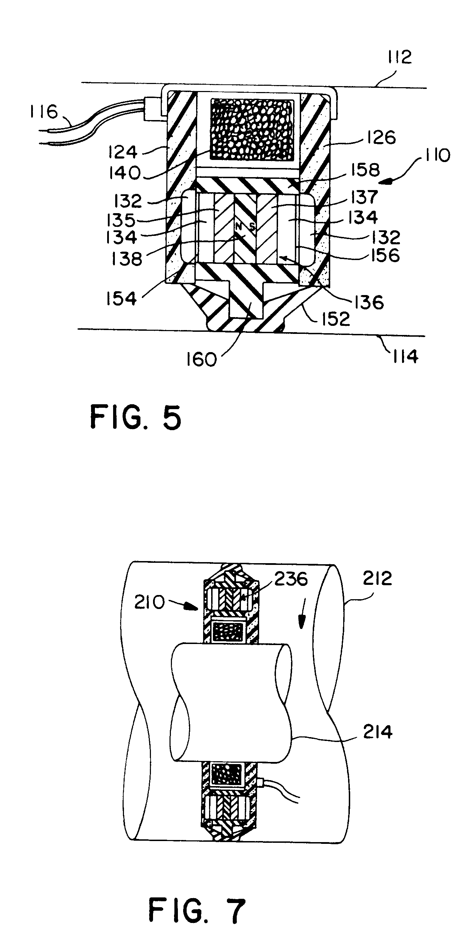

Rim 50, shown on the inside diameter of rotor 36, retains elastomeric ring 52. Ring 52 serves four functions. First, it provides a friction drive between shaft 14 and rim 50 of rotor 36. Second, it provides vibration isolation of the rotor relative to its driving member. Third, the area of contact between stator elements 24, 26 and ring 52 provides a running seal to keep contaminants out of the relatively moving parts of sensor 10. Fourth, compression of the ring at the stator element sealing surface provides a centering force for rotor 36, tending to keep the rotor from contacting the stator elements 24, 26. For added insurance against rotor-stator contact, rotor rims may be included, as described below with respect to Figure 5.

Friction drive of the rotor via ring 52 is the preferred drive means for the rotational speed sensor; other drive means, however, including tangs or keys engaging slots on the rotating shaft, could also be used, with or without a seal.

A toroidal magnetic flux path 53 is thus established around coil 40 and proceeds axially from one face of magnet 38 to one adjacent stator element, radially through the stator element, axially into rotor 36 and out of rotor 36 into the other stator element, and finally radially through this second stator element and back into magnet 38. As rotor 36 rotates, the rotor and stator teeth 34 and 32 move into and out of juxtaposition to alternately decrease and increase the magnetic reluctance of the magnetic path. The change in reluctance increases and decreases the magnetic flux in the magnetic path. This change in flux generates a voltage in coil 40 in accordance with known principles. The output voltage on leads 16 will be an alternating voltage with an amplitude proportional to the speed of rotation, and a frequency equal to the speed of rotation times the number of teeth in 360°.

The Figure 3 embodiment requires retainer 18 to be non-magnetic to avoid shunting of magnetic flux. Furthermore, if bore 12 is ferromagnetic, a spacer 42 must be included to avoid shunting by the bore.

Figure 4 shows the sensor cross section of Figure 3, but with stator elements 24 and 26 composed of a composite material rather than a metal plate backed by a non-metal backing material. Stator elements 24 and 26 may, for example, be molded from a plastic or nylon having iron powder dispersed to a density such that its permeability is sufficient to provide an adequate magnetic path. The advantages of this method of construction include better dimensional control of components and lower cost due to simpler processing. Slots 31 and 33 in stator elements 24, 26 and rotor 36 may be filled with nonmagnetic material as before to prevent damage due to rubbing.

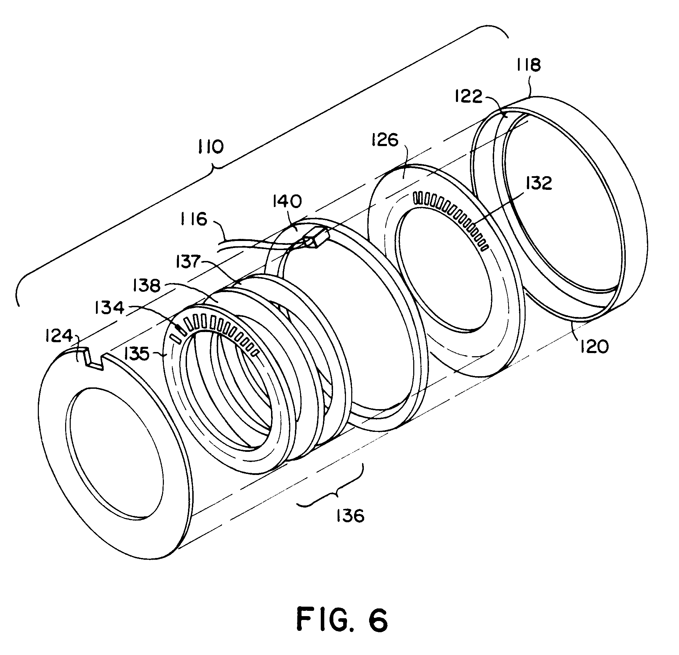

Figure 5 shows a second embodiment of a rotational speed sensor. With reference to both Figure 5 and Figure 6, rotor 136 is shown split into two halves, sandwiching magnet 138. Magnet 138 further has relatively smaller inner and outer diameters, approximately equal now to those of the rotor halves 135 and 137 so that the rotor-magnet assembly nests within coil 140 and between stator elements 124 and 126. Coil 140 may be adhesively or otherwise fastened to stator elements 124, 126. So long as the thickness of magnet 138 is appreciably greater than the combined air gaps shown at 154 and 156, the operating point on the demagnetization curve of magnet 138 will be high enough to provide an adequate change in flux to produce a sufficient voltage from coil 140. Magnet 138, therefore, may be as thin as is operationally practical. This embodiment has the advantages of reducing space requirements, decreasing the cost of magnet 138 and eliminating the shunting effect of a steel bore (such as 12) in close proximity to magnet 38 as in the first embodiment.

Rotor 136 is constructed to maintain a minimum rotor-stator clearance. In an exemplary construction, the two ferromagnetic rotor halves 135 and 137 are indexed and placed in an injection molding cavity with magnet 138 between them. Rotor rims 158 and 160 are then molded around rotor halves 135 and 137 and magnet 138. The molding cavity is constructed so that air gaps 154 and 156 are created. These gaps are on the order of 0.005 inches.

By relocating magnet 138 between rotor halves 135 and 137, the flux path now proceeds from magnet 138 across one air gap, radially through the adjacent stator element, then axially through retainer 118, down radially through the other stator element, and back to magnet 138.

Rotor rims 158 and 160 are shown abutting stator element 124 with running clearance from stator element 126. Rotor rims 158 and 160 may run in contact with either stator element or float between the stator elements, but are always in preventive contact with rotor 136 (i.e., contact rotor 136 in such a manner that rotor teeth 134 never contact stator teeth 132). Although shown as rims, rotor rims 158 and 160 may be any suitable spacer means for maintaining rotor-stator spacing. A nearly true sine wave output from coil 140 is achieved with no anomalies so long as a few thousandths of an inch clearance is maintained between rotor and stator teeth 134 and 132, a goal achieved by rims 158 and 160.

Since rotor rims 158 and 160 act as bearing surfaces running against stator elements 124 and 126, the composition of rims 158 and 160 must be compatible with the stator material to minimize wear. For example, if steel stator elements are used, nylon or nylon with a low-friction additive would be satisfactory. If iron-filled composite is used for the stator elements (as shown in Figure 5), the stator matrix would preferably be polyethersulphone working against nylon rims. As a further method of reducing friction, sensor 110 may be filled with grease or oil, with lubrication lands put in the rim area facing the stator elements. Depending upon wear characteristics, a single rotor rim (e.g., 158 or 160) may be used instead of two.

The elastomeric ring 152, which forms the seal for this second embodiment, performs essentially the same functions as elastomeric ring 52 from the first embodiment, but is located differently on the second embodiment sensor. As shown in Figure 5, ring 152 extends along both the extension of rim 160 and stator elements 124 and 126, but does so without the cavity formed between the two stator elements. As such, elastomeric ring 152 acts as a low-friction axial seal instead of as a radial seal.

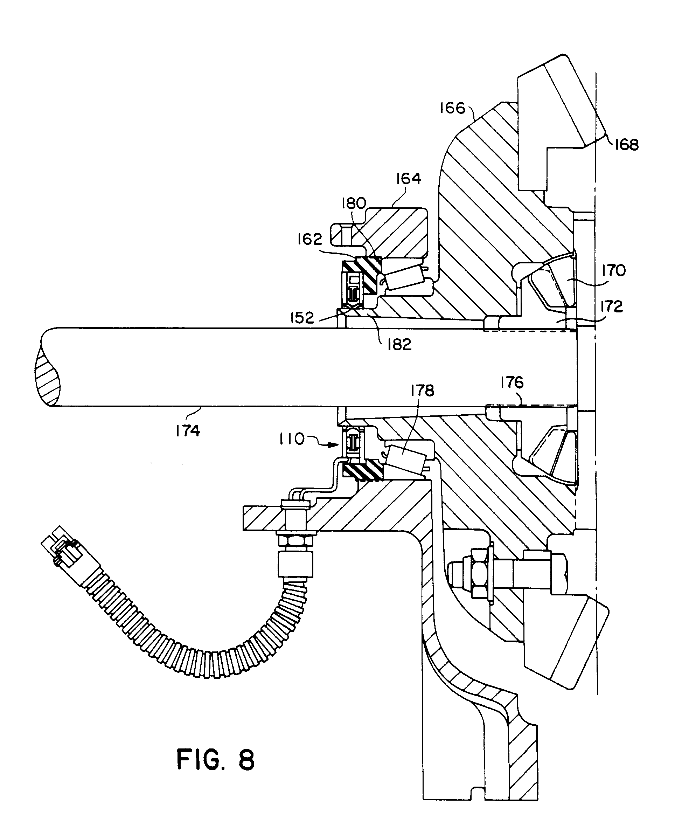

All of the configurations discussed thus far are designed for speed sensing of a rotating shaft within a stationary bore. The present speed sensor may be modified to also satisfy requirements where the shaft is stationary and the bore rotates. Figure 7 shows a sensor 210 mounted on a stationary shaft 214 with rotor 236 being driven by a rotating bore 212. The arrangement shown in Figure 7 functions in essentially the same manner as the arrangement of Figure 5, but with the radial positioning of elastomeric ring 152, rotor 136, and coil 140 reversed. Figure 7 shows shaft 214 being used to close the flux path. It must, therefore, have a composition capable of providing a magnetic flux path, for example steel. As in the Figure 5 configuration, the stator elements may be fastened to the coil using adhesive.

One application for a flat, compact speed sensor such as the present invention is for measurement of wheel speed in a driving axle of a vehicle. Figure 8 shows a sensor 110 such as that shown in Figure 5 nested within a differential case adjusting ring 162. Axle housing member 164 is stationary, and connected to a vehicle through the suspension system. Differential case 166 carries a ring gear 168 and is rotationally driven by a pinion. Differential case 166 also carries differential gears 170 and 172, which turn axle 174 through splines 176.

Tapered roller bearing 178 and a similar bearing (not shown) on the other side of axle 174 allow differential case 166 to rotate freely. Adjusting ring 162 and a similar ring on the other end of axle 174 retain and position differential case 166 through the tapered roller bearings 178 in the axle housing 164. Adjusting ring 162 is externally threaded as seen at 180, and it screws into the stationary axle housing 164. By means of the two adjusting rings 162, ring gear 168 is properly postitioned along the axis of axle 174 relative to the drive pinion. Adjusting rings 162 have castellations which are used to lock the position of adjusting ring 162 with a cotter key. A flanged portion 182 on differential case 166 extends out between adjusting ring 162 and axle 174.

Speed sensor 110 and adjusting ring 162 are sized for a light press fit of sensor 110 into adjusting ring 162. An adhesive may also be used for a more secure fit. Elastomeric ring 152 slides over the outside of flange 182 on differential case 166. Flange 182 is long enough to protect sensor 110 from being damaged when axle 174 is put into the axle assembly.

As mentioned previously, friction drive of the rotor via the elastomeric ring is the preferred drive means for the rotational speed sensor. Friction drive makes assembly easy, and it eliminates alignment problems associated with locking the rotor to the driving element (flange 182 in the Figure 8 embodiment). Tang drive is possible, but requires extremely close tolerances to avoid backlash, which could give erroneous speed signals.

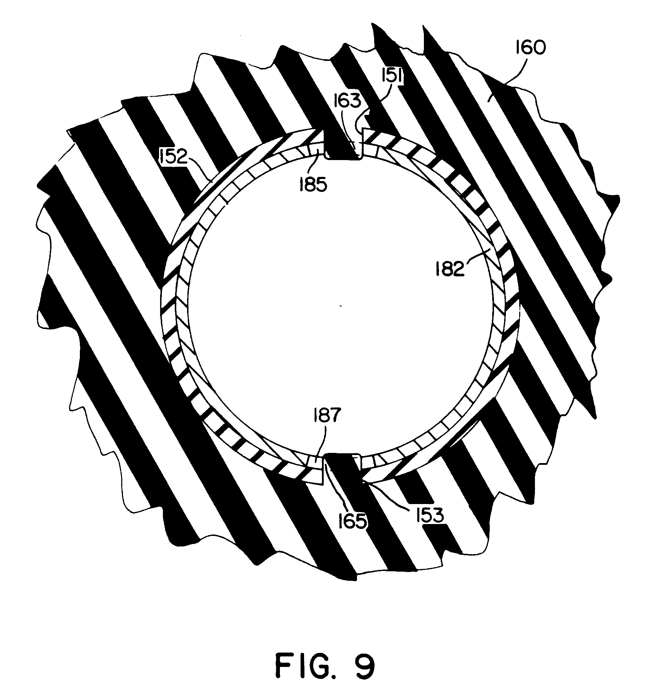

Tang drive would be required, however, in certain circumstances where high drive torque might overcome the frictional force of a friction drive means. In such a circumstance, a combination of friction drive and tang drive is preferred. Figure 9 shows a partial sectional view through the center of a modified speed sensor mounted as in the Figure 8 embodiment, but incorporating a combined friction and tang drive. Rotor rim 160 includes tangs 163 and 165, which protrude through slots 151 and 153 in elastomeric ring 152. Slots 151 and 153 are axially located in the center of ring 152 so as to maintain the integrity of ring 152. Flange 182 has slots 185 and 187 formed in it to accept tangs 163 and 165. Slots 185 and 187 may be formed wider than the tangs for ease of assembly. Tang drive in the Figure 9 arrangement is a backup drive means to the preferred friction drive. Normal rotation is accomplished by the frictional force between elastomeric ring 152 and flange 182. When the torque requirement exceeds the frictional capabilities, however, tangs 163 and 165 are engaged via slots 185 and 187 to drive the rotor.

Sensor 110 thus measures the speed of rotation of the differential case. If the vehicle is not turning a corner, both differential case 166 and the wheels (not shown) are rotating at the same angular speed. If the vehicle is turning, the outside wheel turns faster than the inside wheel, and the differential case 166 turns at the average speed of the two wheels on that axle (assuming only two wheels on the axle). An antilock braking system can utilize the differential case speed to control the brakes on that axle.

The same basic arrangement shown in Figure 8 can also be used for traction control, which requires measuring the speed of both wheels on an axle. For this application, a sensor 110 is installed in both adjusting rings 162 used to position differential case 166. Flange 182, however, is removed and the sensor dimensions are modified so that sensor 110 is driven directly by axle 174. Knowing the speed of each wheel, a brake can be applied to balance the wheel speeds.

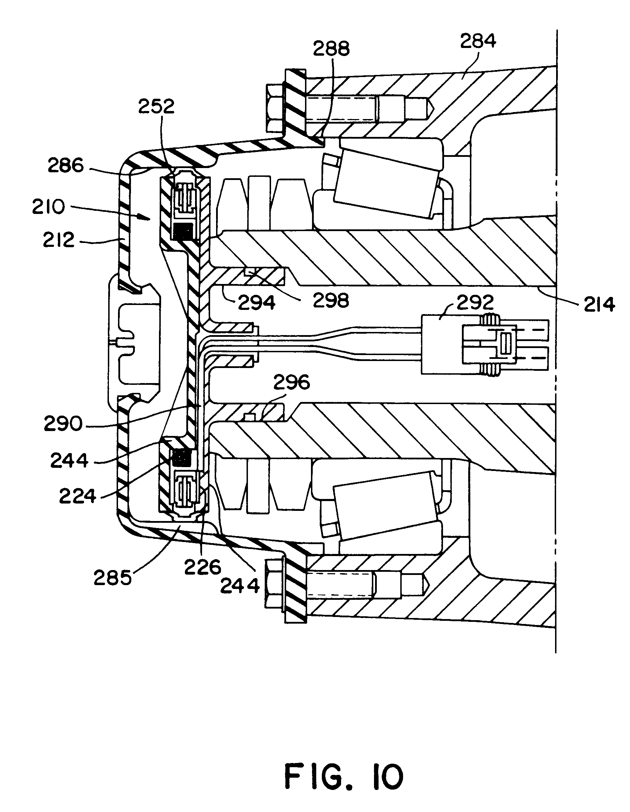

Figure 10 shows the speed sensor 210 of Figure 7 applied to measure the speed of rotation of a non-driven wheel, as determined by measuring the rotation speed of wheel hub 284. Elastomeric ring 252 contacts hubcap 212 along its inside surface 286. Hubcap 212 is piloted on wheel hub 284 via flange portion 288 to assure that hubcap 212 is concentric with wheel spindle 214. As the wheel spindle 214 and hub 284 turn, hubcap 212 drives speed sensor 210.

Speed sensor 210 functions in essentially the same manner as the previous sensor is described. As shown in Figure 10, however, the outer structural design of speed sensor 210 is modified to fit the particular exemplary environment. Stator elements 224 and 226 are metal plates molded into backing layers 244 in a fashion similar to that described with respect to Figure 3. Channel 290 is formed in the backing material behind both stator elements 224 and 226 to provide a conduit for leads coming from coil 240 to connector 292, and therefore to external processing circuitry. A sensor hub 294 formed from the backing material of the internal stator slidably engages counterbore 296 of spindle 214. An O-ring 298 seals counterbore 296.

Hubcap 212 seals the hub end and retains the bearing lubricant. Hubcap 212 is preferably an injection molding of a clear plastic to allow easy visual inspection of lubricant level. Channels 285 are provided in hubcap 212 to allow lubricant to flow from the spindle side of sensor 210 to the hubcap side.

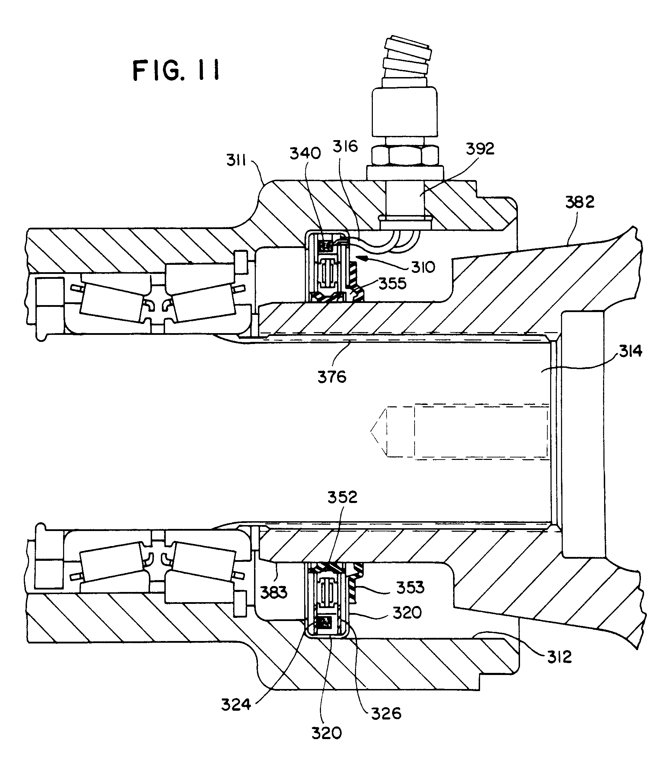

Figure 11 shows another application for a rotational speed sensor like that of Figure 5. Sensor 310 is installed in the output end of transmission case 311. In this installation, sensor 310 measures the speed of transmission output shaft 314 and also acts as the output shaft oil seal. Sensor 310 is pressed into bore 312 on case 311. Lead wires 316 from sensor 310 conduct the alternating voltage signal from coil 340 to connector 392, and thus to external processing circuity (not shown).

Sensor 310 measures the speed of shaft 314 via universal joint yoke 382, which slides over shaft 314. Shaft 314 and yoke 382 are radially engaged by splines 376 and axially held by a bolt and washer (not shown).

When yoke 382 is assembled onto shaft 314, yoke seal surface 383 engages elastomeric ring 352. Elastomeric ring 352 blocks the escape of transmission oil, since it presents a fixed seal on yoke seal surface 383 and a running seal on stator elements 324 and 326 as previously described with respect to Figure 10.

In addition to the seal provided by elastomeric ring 352, a dirt seal 353 is also provided. This elastomeric seal 353 is bonded to retainer 318. The side face 320 of retainer 318 is much wider than the corresponding side face 20 of retainer 18 shown in Figure 2, since dirt seal 353 must be supported close to the inside diameter surface of sensor 310. Dirt seal 353 prevents dirt and water from getting to elastomeric ring 352 and beyond. Additionally, the annular ring gap 355 formed between seals 352 and 353 may be packed with grease to trap any dirt which might get past dirt seal 353.

One skilled in the art will readily recognize that certain specific details shown in the foregoing specification and drawings are exemplary in nature and subject to modification without departing from the teachings of the disclosure. For example the stator teeth have been defined as having greater radial length than the rotor teeth to reduce radial runout. Having rotor teeth longer than stator teeth achieves a similar result. Moreover, the inclusion of wire leads connecting the sensing coil to processing circuitry is exemplary; any suitable communication means may be used. The disclosed combination of tang drive and friction drive is additionally feasible for various applications of the speed sensor.

## Claims

1. A rotational speed sensor (10, 110, 210, 310) comprising a stator (24, 26; 124, 126) having circumferentially spaced teeth means (32, 132) formed thereon;
a coil of wire (40, 140) disposed coaxial with said stator (24, 26; 124, 126);
a magnet (38, 138) disposed coaxial with said stator (24, 26; 124, 126);
a rotor (36, 136) arranged for rotation about a rotational axis and having first and second axially spaced radially extending surfaces, including circumferentially spaced teeth means (34, 134);
said teeth means (32, 132) of said stator (24, 26; 124, 126) being arranged in physical opposition and in close proximity to said teeth means (34, 134) of said rotor (36, 136), whereby an electrical current is induced in said coil (40, 140) upon rotation of said rotor (36, 136),
characterized in that
said stator includes two coaxial, axially spaced stator elements (24, 26, 124, 126), each stator element (24, 26, 124, 126) having opposed inner and outer radially extending surfaces, each inner surface having said teeth means (32, 132) formed thereon;
said coil of wire is disposed between said stator elements (24, 26, 124, 126);
said magnet (38, 138) is disposed between said stator elements (24, 26, 124, 126);
said teeth means (34, 134) of said rotor (36, 136) are formed on said first and second surfaces of said rotor (36, 136); and
said rotor (36, 136), said coil (40, 140) and said magnet (38, 138) nest coaxially between said stator elements (24, 26, 124, 126).

2. A rotational speed sensor as claimed in claim 1, characterized in that said magnet (138) is radially spaced with respect to said rotor (36).

3. A rotational speed sensor as claimed in claim 2, characterized in that a nonferromagnetic spacer means (42) arranged to prevent shunting of a magnetic flux path away from said magnet (38, 138) is provided.

4. A rotational speed sensor as claimed in claim 1, characterized in that said rotor (136) comprises two coaxial halves (135, 137), and that said magnet (138) is axially spaced with respect to said rotor halves.

5. A rotational speed sensor as claimed in claim 1, 2, or 4, characterized in that said rotor (36, 136) nests within said coil (40, 140) so that said rotor (36, 136) is rotated by a driving element.

6. A rotational speed sensor as claimed in claim 1, 2, or 4, characterized in that said coil (40, 140) nests within said rotor (36, 136) so that said rotor (36, 136) is rotated by an overrunning driving element.

7. A rotational speed sensor as claimed in claim 1, 2, or 4, characterized in that each said stator element (24, 26, 124, 126) comprises a ferromagnetic layer and a nonferromagnetic layer (44).

8. A rotational speed sensor as claimed in claim 1, 2, or 4, characterized in that each said stator element (24, 26, 124, 126) comprises a nonferromagnetic material dispersed woth ferromagnetic particles.

9. A rotational speed sensor as claimed in claim 1, 2, or 4, characterized in that said rotor (36, 136) comprises a nonferromagnetic material dispersed with ferromagnetic particles.

10. A rotational speed sensor as claimed in claim 1, 2, or 4, characterized in that retainer means (18, 118) arranged to retain said stator (24, 26, 124, 126), coil (40, 140) and magnet (38, 138) in a unitized assembly are provided.

11. A rotational speed sensor as claimed in claim 10, characterized in that resilient seal means associated with said retainer means (18, 118) and arranged to prevent passage of contaminants from at least one direction are provided.

12. A rotational speed sensor as claimed in claim 1, 2, or 4, characterized in that said sensor includes tang drive means (163, 165) and friction drive means (152, 182).

13. A rotational speed sensor as claimed in claim 12, characterized in that said friction drive means (152, 182) includes a resilient element having an aperture (151, 152), said aperture (151, 152) arranged to accomodate said tang drive means (163, 165).

14. A rotational speed sensor as claimed in claim 1, 2, or 4, characterized in that means for providing a friction drive for said rotor (36, 136); and seal means for preventing entry of contaminants into the sensor (10, 110, 210, 310) are provided.

15. A rotational speed sensor as claimed in claim 14, characterized in that both said friction drive means and said seal means comprise a unitary resilient seal and drive element (52, 152, 252).

16. A rotational speed sensor as claimed in claim 15, characterized in that said rotor (36, 136) is annular and includes diametrical inner and outer edge surfaces, and that said seal and drive element (52, 152, 252) extends along one said edge surface of said rotor (36, 136) and is in sealing association with said stator (24, 26, 124, 126).

17. A rotational speed sensor as claimed in claim 1, 2, or 4, characterized in that spacer means (42) arranged to maintain axial spacing between said rotor (36, 136) and stator teeth means (32) are provided.

18. Use of a rotational speed sensor according to any one of the preceding claims for measuring the rotational speed of a differential case (166) in an axle housing, said differential case (166) having a rotatable flange member (182), the rotor (36, 136) rotating with said flange member (182) and said stator (24, 26; 124, 126) being held stationary by an adjusting ring (162) connected with said axle housing and encompassing said adjusting ring (162).

19. Use of a rotational speed sensor according to any one of the claims 1 to 17 for measuring the rotational speed of a rotating axle, wherein said axle (174) rotates responsive to rotation of a differential case (166), and said differential case (166) includes an adjusting ring (162), said speed sensor being arranged so that said rotor rotates (36, 136) in response to rotation of said axle (174) and so that said stator (24, 26; 124, 126) is held stationary by said adjusting ring (162).

20. Use of a rotational speed sensor according to any one of claims 1 to 17 for measuring the speed of a rotating hub (284), said rotating hub (284) having a hubcap (212) attached thereto for rotation about and substantially coaxial with a wheel spindle (214), said rotor (36, 136) rotating in response to rotation of said hubcap (212) and said stator (24, 26; 124, 126) being held stationary by said wheel spindle (214).

21. Use of a rotational speed sensor according to any one of claims 1 to 17 for measuring the rotational speed of a transmission output shaft (314), wherein said output shaft (314) rotates in response to rotation of a universal joint yoke (382) positioned within a cavity formed by a transmission case bore (312), said rotor (36, 136) rotating in response to rotation of said universal joint yoke (382), and said stator (24, 26; 124, 126) being held stationary by said transmission case bore (312).

## Patentansprüche

1. Drehgeschwindigkeitssensor (10, 110, 210, 310) mit einem Stator (24, 26; 124, 126), der in Umfangsrichtung voneinander beabstandete, auf ihm ausgebildete Zähne (32, 132) aufweist;
einer Drahtschleife (40, 140), die koaxial zum Stator (24, 26; 124, 126) angeordnet ist;
einem Magnet (38, 138), der koaxial zum Stator (24, 26; 124, 126) angeordnet ist;
einem Rotor (36, 136), der sich um eine Rotationsachse drehen kann und eine erste und eine zweite Fläche aufweist, die axial voneinander beabstandet sind, sich radial erstrecken und in Umfangsrichtung voneinander beabstandete Zähne (34, 134) enthalten;
wobei die Zähne (32, 132) des Stators (24, 26; 124, 126) in unmittelbarer Nähe zu den Zähnen (34, 134) des Rotors (36, 136) angeordnet sind und diesen direkt gegenüberliegen, und wobei in der Schleife (40, 140) bei einer Drehung des Rotors (36, 136) ein elektrischer Strom induziert wird,
dadurch gekennzeichnet,
daß der Stator zwei koaxial angeordnete, axial voneinander beabstandete Statorelemente (24, 26, 124, 126) enthält, wobei jedes Statorelement (24, 26, 124, 126) einander gegenüberliegende, sich radial erstreckende Innen- und Außenflächen aufweist, und wobei die Zähne (32, 132) auf jeder Innenfläche ausgebildet sind;
daß die Drahtschleife zwischen den Statorelementen (24, 26, 124, 126) angeordnet ist;
daß der Magnet (38, 138) zwischen den Statorelementen (24, 26, 124, 126) angeordnet ist;
daß die Zähne (34, 134) des Rotors (36, 136) auf den ersten und den zweiten Flächen des Rotors (36, 136) ausgebildet sind; und
daß der Rotor (36, 136), die Schleife (40, 140) und der Magnet (38, 138) koaxial zwischen die Statorelemente (24, 26, 124, 126) eingesetzt sind.

2. Drehgeschwindigkeitssensor nach Anspruch 1, dadurch gekennzeichnet, daß der Magnet (138) radial vom Rotor (36) beabstandet ist.

3. Drehgeschwindigkeitssensor nach Anspruch 2, dadurch gekennzeichnet, daß ein nicht-ferromagnetisches Distanzelement (42) vorgesehen ist, um einen magnetischen Nebenschlußweg vom Magneten (38, 138) weg zu verhindern.

4. Drehgeschwindigkeitssensor nach Anspruch 1, dadurch gekennzeichnet, daß der Rotor (136) zwei koaxiale Hälften (135, 137) enthält und daß der Magnet (138) axial von den beiden Rotorhälften beabstandet ist.

5. Drehgeschwindigkeitssensor nach Anspruch 1, 2 oder 4, dadurch gekennzeichnet, daß der Rotor (36, 136) so in die Schleife 40, 140) eingesetzt ist, daß der Rotor (36, 136) von einem Antriebselement gedreht wird.

6. Drehgeschwindigkeitssensor nach Anspruch 1, 2 oder 4, dadurch gekennzeichnet, daß die Schleife (40, 140) in den Rotors (36, 136) so eingesetzt ist, daß der Rotor (36, 136) von einem Freilauf-Antriebselement gedreht wird.

7. Drehgeschwindigkeitssensor nach Anspruch 1, 2 oder 4, dadurch gekennzeichnet, daß jedes Statorelement (24, 26, 124, 126) eine ferromagnetische Schicht und eine nicht-ferromagnetische Schicht (44) enthält.

8. Drehgeschwindigkeitssensor nach Anspruch 1, 2 oder 4, dadurch gekennzeichnet, daß jedes Statorelement (24, 26, 124, 126) ein ferromagnetisches Material enthält, in das ferromagnetische Partikel eingestreut sind.

9. Drehgeschwindigkeitssensor nach Anspruch 1, 2 oder 4, dadurch gekennzeichnet, daß der Rotor (36, 136) ein nicht-ferromagnetisches Material enthält, in das ferromagnetische Partikel eingestreut sind.

10. Drehgeschwindigkeitssensor nach Anspruch 1, 2 oder 4, dadurch gekennzeichnet, daß Rückhalteelemente (18, 118) vorgesehen sind, die den Stator (24, 26, 124, 126), die Schleife (40, 140) und den Magnet (38, 138) in einer einheitlichen Anordnung zusammenhalten.

11. Drehgeschwindigkeitssensor nach Anspruch 10, dadurch gekennzeichnet, daß den Rückhalteelementen (18, 118) zugeordnete, elastische Dichtungselemente vorgesehen sind, die so ausgebildet sind, daß sie einen Durchgang von Verunreinigungen aus wenigstens einer Richtung verhindern.

12. Drehgeschwindigkeitssensor nach Anspruch 1, 2 oder 4, dadurch gekennzeichnet, daß der Sensor Antriebszapfen (163, 165) und Reibschlußantriebselemente (152, 182) enthält.

13. Drehgeschwindigkeitssensor nach Anspruch 12, dadurch gekennzeichnet, daß die Reibschlußantriebselemente (152, 182) ein elastisches Element mit einer Öffnung (151, 152) enthalten, wobei die Öffnung (151, 152) so ausgeführt ist, daß sie die Antriebszapfen (163, 165) aufnimmt.

14. Drehgeschwindigkeitssensor nach Anspruch 1, 2 oder 4, dadurch gekennzeichnet, daß Elemente zum Ausbilden des Reibschlußantriebs für den Rotor (36, 136) und Dichtungselemente zum Verhindern des Eintritts von Verunreinigungen in den Sensor (10, 110, 210, 310) vorgesehen sind.

15. Drehgeschwindigkeitssensor nach Anspruch 14, dadurch gekennzeichnet, daß sowohl die Reibschlußantriebselemente als auch die Dichtungselemente ein einheitliches, elastisches Dichtungs- und Antriebselement (52, 152, 252) enthalten.

16. Drehgeschwindigkeitssensor nach Anspruch 15, dadurch gekennzeichnet, daß der Rotor (36, 136) ringförmig ist und sich diametral gegenüberliegende Innen- und Außenrandflächen enthält, und daß das Dichtungs- und Antriebselement (52, 152, 252) sich entlang einer der Randflächen des Rotors (36, 136) erstreckt und dem Stator (24, 26, 124, 126) dichtend zugeordnet ist.

17. Drehgeschwindigkeitssensor nach Anspruch 1, 2 oder 4, dadurch gekennzeichnet, daß Distanzelemente (42) vorgesehen sind, die dazu dienen, den axialen Abstand zwischen dem Rotor (36, 136) und den Statorzähnen (32) aufrechtzuerhalten.

18. Verwendung eines Drehgeschwindigkeitssensors nach einem der vorhergehenden Ansprüche zum Messen der Drehgeschwindigkeit eines Differentialkäfigs (166) in einem Achsgehäuse, wobei der Differentialkäfig (166) einen drehbaren Flansch (182) aufweist, wobei der Rotor (36, 136) sich mit dem Flansch (182) dreht und wobei der Stator (24, 26; 124, 126) stationär durch einen Einstellring (162) gehalten wird, der mit dem Achsgehäuse verbunden ist, und den Einstellring (162) umschließt.

19. Verwendung eines Drehgeschwindigkeitssensors nach einem der Ansprüche 1 bis 17 zum Messen der Drehgeschwindigkeit einer rotierenden Welle, wonach die Welle (174) sich in Abhängigkeit von der Drehung eines Differentialkäfigs (166) dreht, und wonach der Differentialkäfig (166) einen Einstellring (162) enthält, wobei der Geschwindigkeitssensor so angeordnet ist, daß der Rotor (36, 136) sich in Abhängigkeit von der Drehung der Welle (174) dreht, und daß der Stator (24, 26; 124, 126) durch den Einstellring (162) stationär gehalten wird.

20. Verwendung eines Drehgeschwindigkeitssensors nach einem der Ansprüche 1 bis 17 zum Messen der Geschwindigkeit einer rotierenden Nabe (284), wobei die rotierende Nabe (284) eine an ihr befestigte Nabenkappe (212) aufweist, die sich im wesentlichen koaxial um eine Radachse (214) dreht, wobei der Rotor (36, 136) sich in Abhängigkeit von der Drehung der Nabenkappe (212) dreht und wobei der Stator (24, 26, 124, 126) von der Radachse (214) stationär gehalten wird.

21. Verwendung eines Drehgeschwindigkeitssensors nach einem der Ansprüche 1 bis 17 zum Messen der Drehgeschwindigkeit einer Übertragungsausgangswelle (314), wobei die Ausgangswelle (314) sich in Abhängigkeit von der Drehung einer Kreuzgelenkgabel (382) dreht, die in einem durch eine Bohrung (312) in einem Übertragungskäfig gebildeten Hohlraum angeordnet ist, wobei der Rotor (36, 136) sich in Abhängigkeit von der Drehung der Kreuzgelenkgabel (382) dreht und wobei der Stator (24, 26; 124, 126) durch die Bohrung (312) im Übertragungskäfig stationär gehalten wird.

## Revendications

1. Capteur de vitesse de rotation (10, 110, 210, 310) comprenant un stator (24, 26; 124, 126) possédant des moyens formant dents (32, 132) espacés sur le circonférence dudit stator;
une bobine (40, 140) se trouvant dans le même axe que ledit stator (24, 26; 124, 126);
un aimant (38, 138) se trouvant dans le même axe que ledit stator (24, 26; 124, 126);
un rotor (36, 136) réglé pour tourner selon un axe de rotation et possédant des première et seconde surfaces s'étendant radialement et espacées axialement, comportant des moyens formant dents (34, 134), espacés sur la circonférence;
lesdits moyens formant dents (32, 132) dudit stator (24, 26; 124, 126) étant en opposition et se trouvant à proximité desdits moyens formant dents (34, 134) dudit rotor (36, 136), par lequel un courant électrique est induit dans ladite bobine (40, 140) lors de la rotation dudit rotor (36, 136),
caractérisé en ce que
ledit stator comprend deux éléments de stator (24, 26, 124, 126) coaxiaux et espacés axialement, chaque élément de stator (24, 26, 124, 126) possédant des surfaces s'étendant radialement internes et externes opposées et chaque surface interne possédant lesdits moyens formant dents (32, 132);
ladite bobine se trouve entre lesdits éléments de stator (24, 26, 124, 126);
ledit aimant (38, 138) se trouve entre lesdits éléments de stator (24, 26, 124, 126);
lesdits moyens formant dents (34, 134) dudit rotor (36, 136) se trouvent sur lesdites première et seconde surfaces dudit rotor (36, 136); et
ledit rotor (36, 136), ladite bobine (40, 140) et ledit aimant (38, 138) sont emboîtés coaxialement entre lesdits éléments de stator (24, 26, 124, 126).

2. Capteur de vitesse de rotation selon la revendication 1, caractérisé en ce que ledit aimant (138) est radialement espacé par rapport audit rotor (36).

3. Capteur de vitesse de rotation selon la revendication 2, caractérisé en ce qu'un dispositif d'espacement non-ferromagnétique (42) permettant d'éviter la dérivation du flux magnétique dudit amant (38, 138) est fourni.

4. Capteur de vitesse de rotation selon la revendication 1, caractérisé en ce que ledit rotor (136) comprend deux moitiés coaxiales (135, 137), et en ce que ledit aimant (138) est axialement espacé par rapport auxdites moitiés du rotor.

5. Capteur de vitesse de rotation selon les revendications 1, 2 ou 4, caractérisé en ce que ledit rotor (36, 136) s'emboîte dans ladite bobine (40, 140) de manière à ce que ledit rotor (36, 136) soit entraîné en rotation par un organe moteur.

6. Capteur de vitesse de rotation selon les revendications 1, 2 ou 4, caractérisé en ce que ladite bobine (40, 140) s'emboîte dans ledit rotor (36, 136) de manière à ce que ledit rotor (36, 136) soit entraîné en rotation par un organe moteur à inertie.

7. Capteur de vitesse de rotation selon les revendications 1, 2 ou 4, caractérisé en ce que chaque élément de stator (24, 26, 124, 126) possède une couche ferromagnétique et une couche non-ferromagnétique (44).

8. Capteur de vitesse de rotation selon les revendications 1, 2 ou 4, caractérisé en ce que chaque élément de stator (24, 26, 124, 126) comprend un matériau non-ferromagnétique dispersé avec des particules ferromagnétiques.

9. Capteur de vitesse de rotation selon les revendications 1, 2 ou 4, caractérisé en ce que ledit rotor (36, 136) possède un matériau non-ferromagnétique dispersé avec des particules ferromagnétiques.

10. Capteur de vitesse de rotation selon les revendications 1, 2 ou 4, caractérisé en ce que des moyens de retenue (18, 118) permettant de retenir lesdits stator (24, 26, 124, 126), bobine (40, 140) et aimant (38, 138) en un assemblage uni sont fournis.

11. Capteur de vitesse de rotation selon la revendication 10, caractérisé en ce que des moyens d'étanchéité élastiques associés auxdits moyens de retenue (18, 118) et permettant d'éviter le passage des contaminants dans au moins un sens sont fournis.

12. Capteur de vitesse de rotation selon les revendications 1, 2 ou 4, caractérisé en ce que ledit capteur comprend un moyen de commande de suspension (163, 165) et un moyen de commande de frottement (152, 182).

13. Capteur de vitesse de rotation selon la revendication 12, caractérisé en ce que ledit moyen de commande du frottement (152, 182) comprend un élément résilient possédant une ouverture (151, 152), ladite ouverture (151, 152) permettant d'adapter ledit moyen de commande de suspension (163, 165).

14. Capteur de vitesse de rotation selon les revendications 1, 2 ou 4, caractérisé en ce qu'un moyen pour fournir une commande du frottement pour ledit rotor (36, 136); et des moyens d'étanchéité permettant d'empêcher l'entrée de contaminants à l'intérieur du capteur (10, 110, 210, 310) sont fournis.

15. Capteur de vitesse de rotation selon la revendication 14, caractérisé en ce que lesdits moyens de commande du frottement et moyens d'étanchéité comprennent un élément d'étanchéité élastique et de commande unitaire (52, 152, 252).

16. Capteur de vitesse de rotation selon la revendication 15, caractérisé en ce que ledit rotor (36, 136) est annulaire et comprend des surfaces de bordure diamétrales internes et externes, et que ledit élément de commande et d'étanchéité (52, 152, 252) se prolonge le long d'une desdites surfaces de bordure dudit rotor (36, 136) et est associé de manière étanche avec ledit détecteur (24, 26, 124, 126).

17. Capteur de vitesse de rotation selon les revendications 1, 2 ou 4, caractérisé en ce que des moyens d'espacement (42) permettant de maintenir un espacement axial entre ledit rotor (36, 136) et les moyens formant dents du stator (32) sont fournis.

18. Utilisation d'un capteur de vitesse de rotation conformément à l'une des revendications précédentes quelle qu'elle soit pour la mesure de la vitesse de rotation d'un boîtier différentiel (166) dans l'enveloppe d'un essieu, ledit boîtier différentiel (166) possédant un élément à bride rotatif (182), le rotor (36, 136) tournant avec ledit élément à bride (182) et ledit stator (24, 26; 124, 126) étant maintenu fixe à l'aide d'une bague d'ajustage (162) connectée avec ladite enveloppe de l'essieu, et ceignant ladite bague d'ajustage (162).

19. Utilisation d'un capteur de vitesse de rotation conformément à l'une des revendications 1 à 17, quelle qu'elle soit, pour la mesure de la vitesse de rotation d'un essieu rotatif, dans lequel ledit essieu (174) tourne en réponse à la rotation d'un boîtier différentiel (166), et ledit boîtier différentiel (166) comprend une bague d'ajustage (162), ledit capteur de vitesse étant conçu de manière à ce que le rotor (36, 136) tourne en réponse à la rotation dudit essieu (174) et de manière à ce que ledit stator (24, 26; 124, 126) soit maintenu fixe à l'aide de ladite bague d'ajustage (162).

20. Utilisation d'un capteur de vitesse de rotation conformément à l'une quelconque des revendications 1 à 17, pour la mesure de la vitesse d'un moyeu rotatif (284), ledit moyeu rotatif (284) possédant un chapeau (212) attaché pour la rotation autour de et sensiblement coaxiale avec un axe de roue (214), ledit rotor (36, 136) tournant en réponse à la rotation dudit chapeau (212) et ledit stator (24, 26; 124, 126) étant maintenu fixe à l'aide dudit axe de roue (214).

21. Utilisation d'un capteur de vitesse de rotation conformément à l'une quelconque des revendications 1 à 17, pour la mesure de la vitesse de rotation d'un arbre de sortie de transmission (314) dans lequel ledit arbre de sortie (314) tourne en réponse à la rotation d'une extrémité à chape (382) se trouvant dans une cavité formée par un espace de la boîte de transmission (312), ledit rotor (36, 136) tournant en réponse à la rotation de ladite extrémité à chape (382), et ledit stator (24, 26, 124, 126) étant maintenu fixe par ledit espace de la boîte de transmission (312).
